# EUROPÄISCHE PATENTSCHRIFT

(11) **EP 1 749 686 B1**
(45) Veröffentlichungstag und Bekanntmachung des Hinweises auf die Patenterteilung: **01.12.2010**
(21) Anmeldenummer: 06012690.1
(22) Anmeldetag: 21.06.2006
(51) Int. Cl.: B60K 13/04, F01N 13/14

(54) **Abgasanlage für Kraftfahrzeuge**
Exhaust system for motor vehicle
Système d'échappement pour véhicule automobile

(30) Priorität: 06.08.2005 DE 10537142
(43) Veröffentlichungstag der Anmeldung: 07.02.2007
(73) Patentinhaber: Faurecia Abgastechnik GmbH, 90765 Fürth (DE); Volkswagen Aktiengesellschaft, 38436 Wolfsburg (DE)
(72) Erfinder: Hänies, Holger, 31275 Lehrte-Steinwedel (DE); Naubert, Mario, 92318 Neumarkt (DE); Betzold, Dieter, D-91448 Emskirchen (DE)
(74) Vertreter: Mörtel & Höfner

(56) Entgegenhaltungen:
- EP-A- 0 744 536
- EP-A- 0 928 885
- EP-A- 0 992 659
- EP-A- 1 426 557
- DE-A1- 2 345 383
- DE-A1- 3 711 101
- DE-A1- 19 625 990
- US-A- 5 881 554

## Beschreibung

Die Erfindung betrifft eine Abgasanlage für Kraftfahrzeuge. Diese umfasst einen aus mehreren Anschlussrohren und einem diese verbindenden Sammelrohr gebildeten Abgaskrümmer sowie eine Abgas-Behandlungseinrichtung, welche beispielsweise ein Dieselpartikelfilter oder ein Abgaskatalysator sein kann. Der Abgaskrümmer ist üblicherweise mit Hilfe eines Anschlussflansches mit dem Motorblock des Fahrzeugs verbunden. Abgasnachbehandlungseinrichtungen arbeiten vielfach erst bei hohen Betriebstemperaturen optimal. Ausreichend hohe Temperaturen werden aber beispielsweise während der Kaltstartphase oder im Falle eines im mittleren oder unteren Lastbereich betriebenen Fahrzeugs oft nicht erreicht. Aus DE 37 11 101 A1 ist es bekannt, zur Verringerung von Wärmeverlusten einen Abgaskrümmer, in dem ein Rußfilter vorhanden ist, mit einem Blechmantel zur umgeben.

Aufgabe der Erfindung ist es, eine Abgasanlage vorzuschlagen, die eine verbesserte Ausnutzung der Abgaswärme insbesondere im mittleren oder unteren Lastbereich eines Fahrzeugmotors gewährleistet.

Diese Aufgabe wird nach Anspruch 1 dadurch gelöst, dass zumindest ein Teil des Abgaskrümmers und wenigstens eine Abgasbehandlungseinrichtung von einem gemeinsamen Isoliergehäuse umschlossen sind. Die vom Abgaskrümmer abgegebene Wärme geht auf diese Weise nicht an die Umgebungsluft verloren, sondern wird in das Innere des gemeinsamen Isoliergehäuses abgegeben und steht somit zur Aufheizung einer Abgasnachbehandlungseinrichtung zur Verfügung. Das Isoliergehäuse verhindert also die sonst üblichen konvektionsbedingten Wärmeverluste. Eine Abgasbehandlungseinrichtung wird dadurch schon kurz nach dem Start auf die erforderliche Betriebstemperatur, bei der beispielsweise katalytische Umsetzungen erfolgen, gebracht. Durch die verbesserte Wärmeausnutzung wird insbesondere im Niederlastbetrieb ein insgesamt höheres Temperaturniveau erreicht, so dass die Wahrscheinlichkeit, dass die Betriebstemperatur der Abgasbehandlungseinrichtung die Wirksamkeitsgrenze unterschreitet, verringert ist.

Vielfach wird bei heutigen Motoren die Verbrennungsluft mit Hilfe von Turboladern vorverdichtet. Es ist zwar denkbar, einen Turbolader innerhalb des gemeinsamen Isoliergehäuses anzuordnen. Aus mehreren Gründen, insbesondere zur Vermeidung thermischer Belastungen sieht die Erfindung nach Anspruch 1 jedoch eine Anordnung außerhalb des gemeinsamen Isoliergehäuses vor. Bei einer einfachen Ausführungsvariante ist der Turbolader einlassseitig mit dem Abgaskrümmer und auslassseitig mit einem den Innenraum des Isoliergehäuses durchsetzenden Abgaskanal mit einem die Abgasbehandlungseinrichtung umschließenden Gehäuse verbunden. Das Abgas gelangt dabei nicht in den Innenraum des Isoliergehäuses, so dass dieses nicht gasdicht ausgeführt sein muss.

Da der Turbolader und die ihn mit dem Isoliergehäuse verbindenden Rohre außerhalb des Isoliergehäuses angeordnet sind, gibt das Abgas auf seinem Weg durch die genannten Bauteile Wärme an die Umgebung ab. Bei einer besonders bevorzugten Ausführungsvariante bildet das Isoliergehäuse einen Teil des Abgaskanals, indem nämlich der Turbolader auslassseitig und die Abgasbehandlungseinrichtung einlassseitig mit dem Innenraum des Isoliergehäuses verbunden sind. Der sich zwischen dem Abgaskrümmer und der Abgasbehandlungseinrichtung erstreckende Strang der Abgasanlage ist somit aufgetrennt und steht mit dem Innenraum des Isoliergehäuses in fluidischer Verbindung. Auf diese Weise kann das Abgas auf seinem Weg durch das Isoliergehäuse Wärme etwa von dessen Innenwand und vom Abgaskrümmer aufnehmen. Dadurch wird gerade in der Kaltstartphase und im Niederlastbetrieb der Wärmeeintrag in die Abgasbehandlungseinrichtung verbessert und deren Aufheizung auf die Betriebstemperatur beschleunigt. Dies kann noch dadurch effektiver gestaltet werden, dass eine Wandöffnung, über die das vom Turbolader kommende Abgas in den Innenraum einströmt, an einem den Abgaskrümmer aufnehmenden ersten Gehäusebereich des Isoliergehäuses angeordnet ist. Das Abgas strömt dann nahe dem Abgaskrümmer in den Gehäuseinnenraum ein, wodurch sich die Möglichkeit eröffnet, den Abgaskrümmer unter Verbesserung der Wärmeaufnahme direkt anzuströmen. Dabei ist es vorteilhaft, wenn zwischen dem Abgaskrümmer und der Wand des Gehäusebereichs ein Luftspalt vorhanden ist, so dass das Abgas den Abgaskrümmer allseitig umströmen kann.

Bei einer besonders bevorzugten Ausführungsvariante wird der Wärmeaustausch zwischen Abgas und Abgaskrümmer noch dadurch erhöht, dass der erste Gehäusebereich von einem die Abgasbehandlungseinrichtung aufnehmenden zweiten Gehäusebereich räumlich abgetrennt ist und dadurch einen sich zumindest über einen Teilbreitenbereich des Abgaskrümmers erstreckenden Strömungskanal bildet. Über die Gehäuseöffnung einströmendes Abgas muss dadurch zumindest einen Teilbreitenbereich des Abgaskrümmers zwangsweise umströmen, bevor es in den zweiten Gehäusebereich und die dort vorhandene Abgasbehandlungseinrichtung gelangt. Dies kann beispielsweise mit Hilfe von Leitblechen vorzugsweise aber dadurch erreicht werden, dass der erste Gehäusebereich den Abgaskrümmer unter Freilassung eines Luftspalts allseitig umschließt und in Breitenrichtung des Abgaskrümmers weisende Enden aufweist, wobei das eine Ende mit dem zweiten Gehäusebereich fluidisch verbunden ist und im Bereich des anderen Endes die oben erwähnte Wandöffnung angeordnet ist. Dadurch wird das Abgas durch den zwischen dem Abgaskrümmer und der Gehäusewand vorhandenen Luftspalt bzw. Strömungskanal geleitet, wobei es praktisch die gesamte Oberfläche des Abgaskrümmer umströmt, und es dabei zu einem intensiven Wärmeaustausch kommt.

Eine besonders bevorzugte Abgasanlage umfasst einen Dieselpartikelfilter als Abgasbehandlungseinrichtung. Die Reinigung eines Dieselpartikelfilters erfolgt in der Regel in Abhängigkeit von dessen Belegungsgrad. Wenn dieser einen bestimmten Wert überschreitet, werden die Rußpartikel durch eine erhöhte Wärmezufuhr entzündet. Die Wärmezufuhr erfolgt beispielsweise dadurch, dass durch ein geeignetes Motormanagement dem Verbrennungsprozess zusätzlicher Kraftstoff zugeführt wird, was zu einer entsprechenden Erhöhung der Abgastemperatur führt. Eine andere Möglichkeit, das Abbrennen angesammelter Rußpartikel einzuleiten besteht darin, den Filterkörper des Dieselpartikelfilters mit Hilfe von Glühkerzen lokal zu erhitzen. Neben diesen Maßnahmen findet eine Verbrennung von Rußpartikeln stets auch dann statt, wenn der Dieselpartikelfilter während des Fahrzeugbetriebs auf eine zur Zündung der Rußpartikeln ausreichende Temperatur erhitzt wird. Dies ist in der Regel nur im Vollastbetrieb der Fall. Im Nieder - und Mittellastbetrieb hat das Abgas niedrigere Temperaturen, so dass der Wärmeeintrag in den Dieselpartikelfilter nicht für eine Zündung der Rußpartikel ausreicht. Durch die erfindungsgemäße Anordnung des Dieselpartikelfilters wird dieser durch die vom Abgaskrümmer abgestrahlte übertragene Wärme wesentlich stärker erhitzt, so dass aufgrund der dadurch verbesserten Wärmebilanz auch weniger heißes Abgas ausreicht, um einen Abbrand angesammelter Rußpartikel zu initiieren. Eine durch separate, zusätzliche Energie verbrauchende Maßnahmen bewirkte Reinigung des Dieselpartikelfilters ist dann nicht mehr oder zumindest nur in größeren Zeitabständen erforderlich.

Wie weiter oben schon erwähnt, können im gemeinsamen Isoliergehäuse mehr als eine Abgasbehandlungseinrichtung vorhanden sein. Im Zusammenhang mit einem Dieselpartikelfilter ist bei einer weiteren bevorzugten Ausgestaltung vorgesehen, dass diesem ein Oxidationskatalysator vorgeschaltet ist. Ein solcher Katalysator beschleunigt beispielsweise die Oxidation von Kohlenmonoxid zu Kohlendioxid und von Kohlenwasserstoffen zu Kohlendioxid und Wasser.

Die Anforderungen hinsichtlich der Umweltverträglichkeit von Fahrzeugen bedingen eine relativ große Anzahl von unterschiedlichen Baugruppen wie Katalysatoren, Dieselpartikelfilter und Schalldämpfer, die nur noch schwierig an der Bodengruppe und im Motorraum eines Fahrzeugs unterzubringen sind. Bei einer weiteren bevorzugten Ausführungsvariante wird eine raumsparende Ausgestaltung dadurch erreicht, dass die Abgasbehandlungseinrichtung ober- oder unterhalb des Abgaskrümmers angeordnet ist.

Die Erfindung wird nun unter Bezugnahme auf die beigefügten Abbildungen näher erläutert. Es zeigen:
- Fig. 1: eine schematische perspektivische Ansicht eines Teils einer Abgasanlage, welcher ein seitlich an einem Motorblock angeordneten, einen Dieselpartikelfilter und einen nen Abgaskrümmer aufnehmendes Isoliergehäuse, und einen an das Gehäuse angeschlossenen Turbolader zeigt,
- Fig. 2: eine perspektivische Ansicht des Isoliergehäuses von seiner dem Motorblock zugewandeten Rückseite her,
- Fig. 3: eine perspektivische Ansicht aus Richtung der dem Mo- torblock abgewandeten Vorderseite des Isoliergehäuses,
- Fig. 4: eine perspektivische Darstellung des Isoliergehäuses mit geöffneter Rückseite,
- Fig. 5: eine Seitenansicht des Isoliergehäuses in Richtung des Pfeils V in Fig. 2,
- Fig. 6: einen Vertikalschnitt entsprechend Linie VI-VI in Fig. 8,
- Fig. 7: einen Vertikalschnitt entsprechend Linie VII-VII in Fig. 8,
- Fig. 8: eine Draufsicht auf die Vorderseite des Isoliergehäu- ses,
- Fig. 9: eine Draufsicht auf die Rückseite des Isoliergehäuses,
- Fig. 10: eine Seitenansicht eines gegenüber den Ausführungsbei- spielen der Fig. 1 - 9 abgewandelten Ausführungsvarian- te.
- Fig. 11: eine gegenüber den Ausführungsbeispielen der Fig. 1 bis 10 abgewandelte Abgasanlage,
- Fig. 12: eine bekannte Abgasanlage.

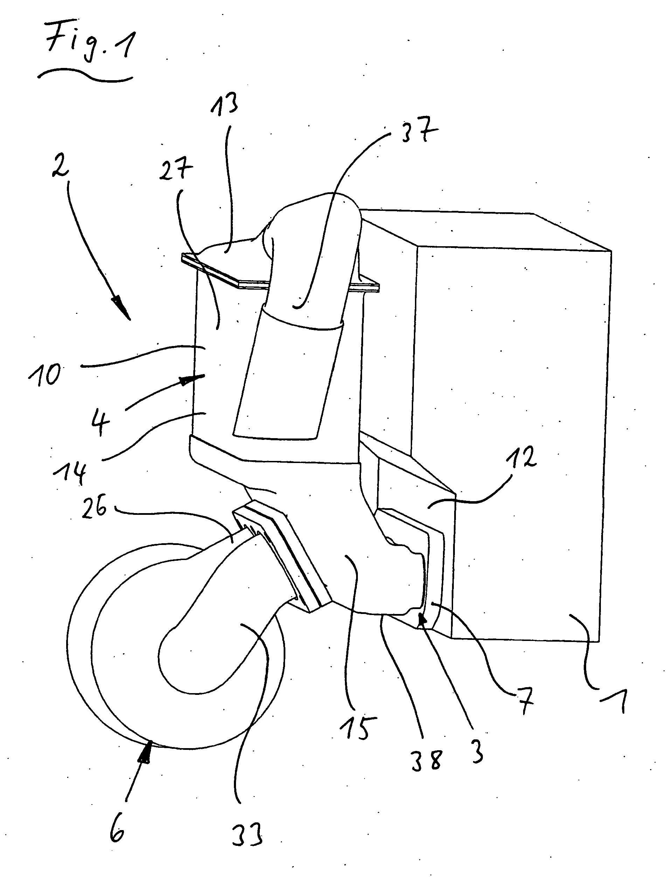

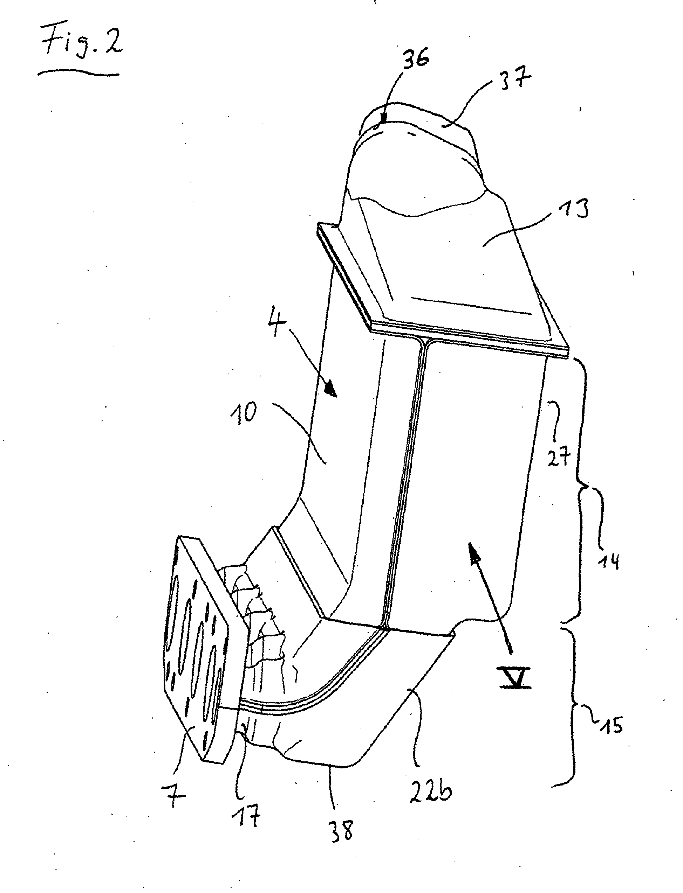

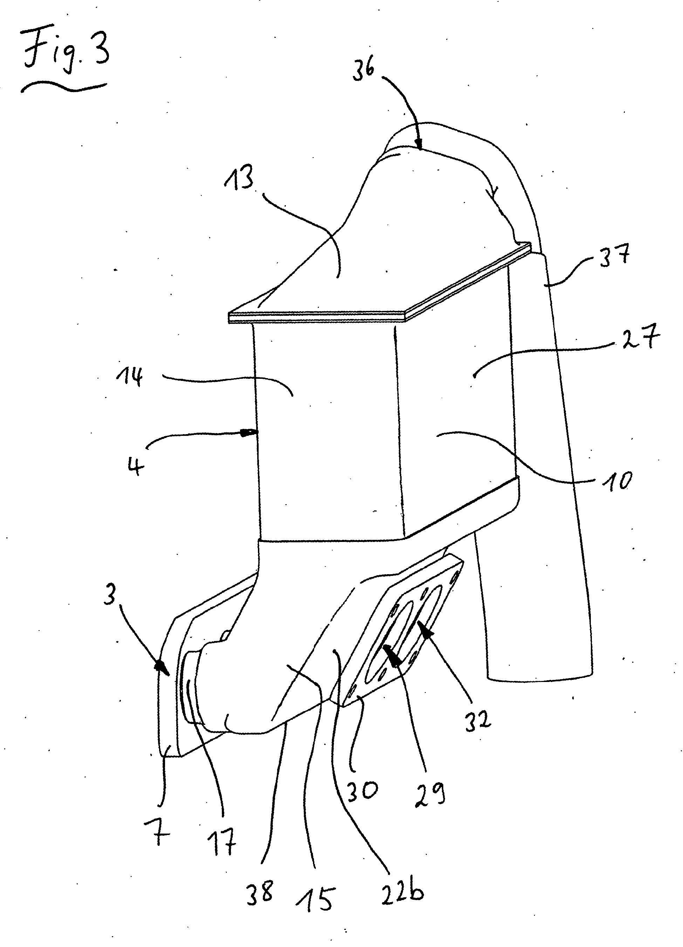

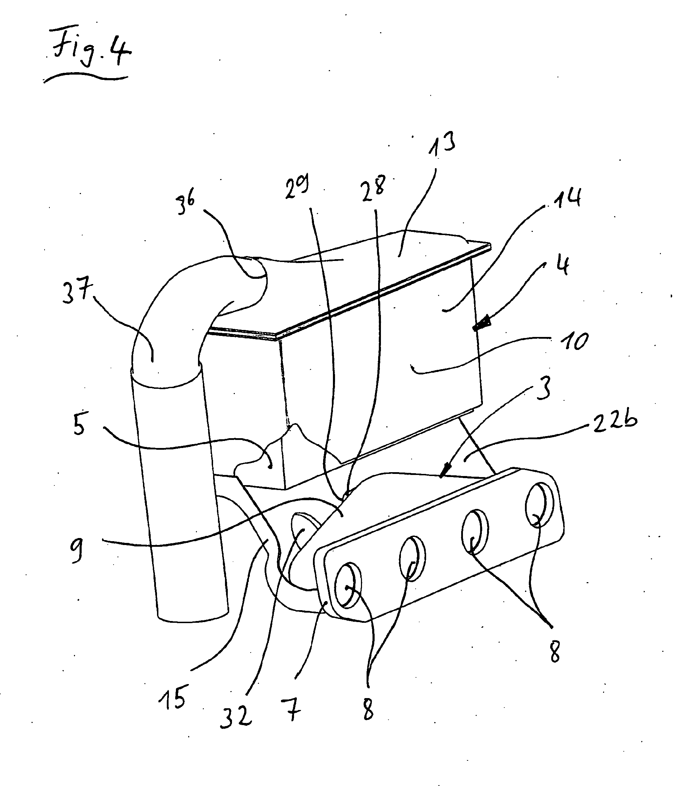

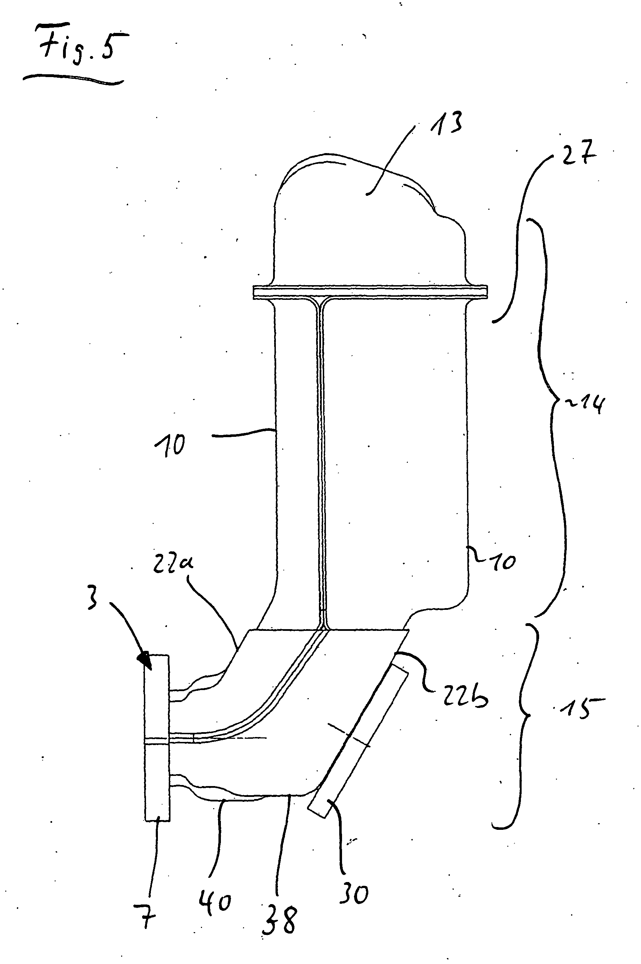

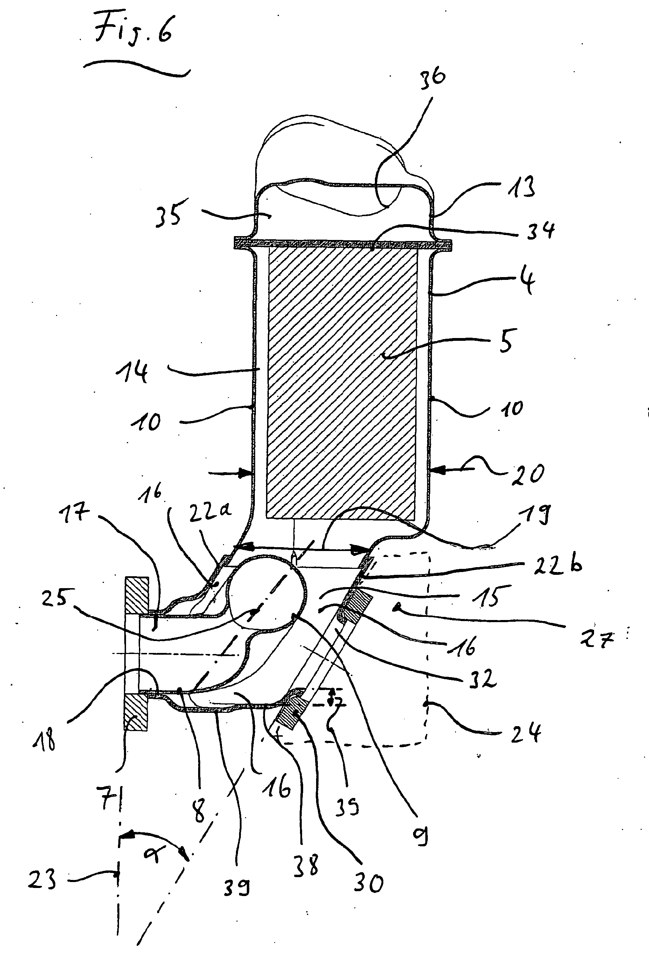

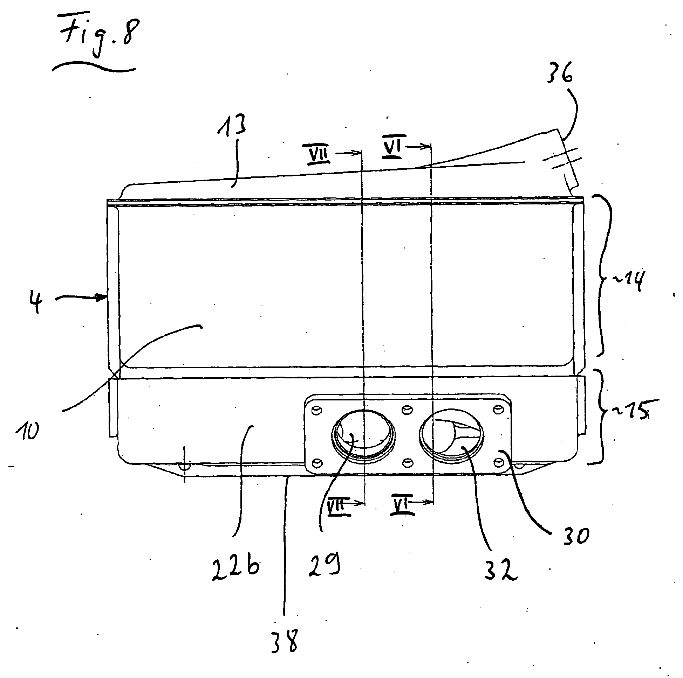

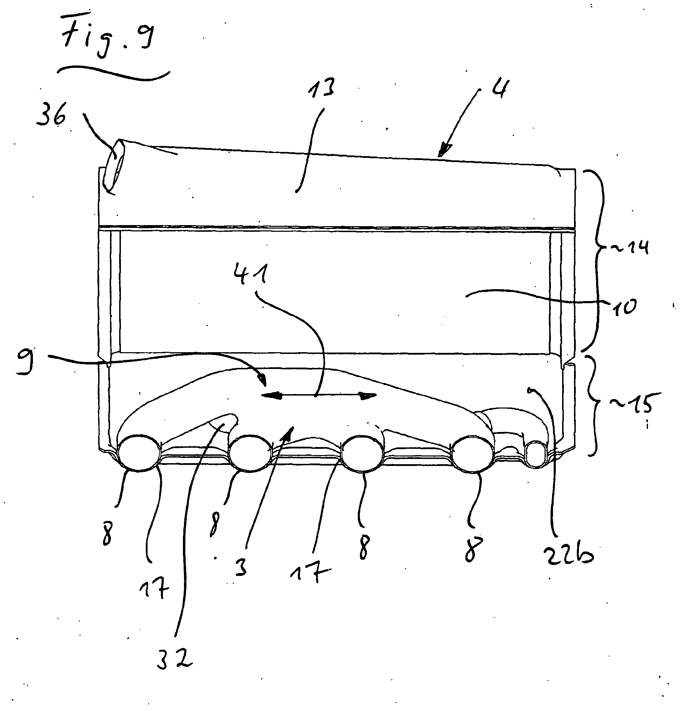

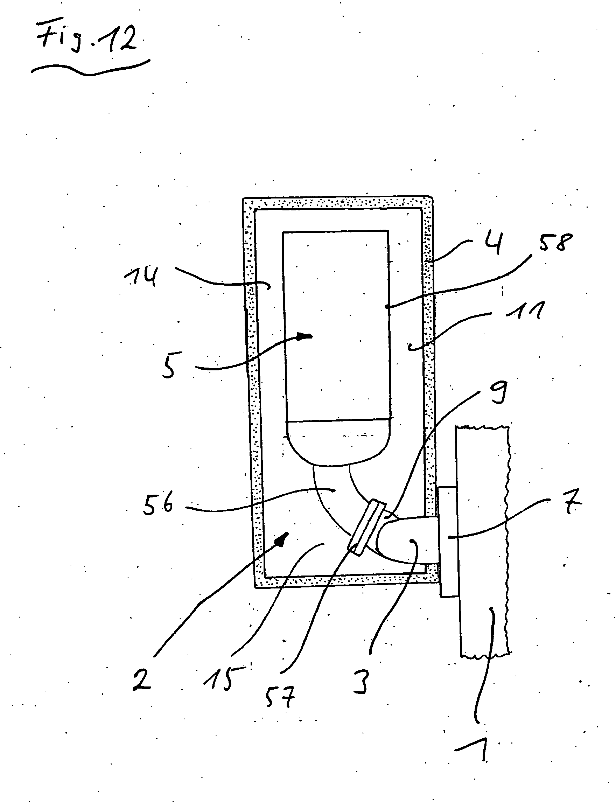

Die Abbildungen zeigen in schematischer Darstellung den sich an einen Motorblock 1 anschließenden Bereich einer Abgasanlage 2. Diese umfasst einen Abgaskrümmer 3, ein Isoliergehäuse 4, eine Abgasbehandlungseinrichtung, beispielsweise einen Dieselpartikelfilter 5, auf den im folgenden exemplarisch bezug genommen wird, und - bis auf das Ausführungsbeispiel von Fig. 12, einen Turbolader 6, wobei das Isoliergehäuse 4 den Dieselpartikelfilter 5 vollständig und den Abgaskrümmer nahezu vollständig aufnimmt. Bei der Darstellung des Isoliergehäuse 4 wurde bei Fig. 1 bis 10 aus Vereinfachungsgründen eine das Isoliergehäuse umhüllende Isolierschicht weggelassen. Der Abgaskrümmer 3 ist mit einem Flansch 7 mit dem Motorblock 1 verbunden. Er weist mehrere, im vorliegenden Beispiel vier Anschlussrohre (Fig. 4, 6) auf, welche über einen Sammelkrümmer 9 miteinander verbunden sind. Oberhalb des Abgaskrümmers 3 ist der Dieselpartikelfilter 5 angeordnet, wobei dieser vom Isoliergehäuse 4 umfasst ist. Das Isoliergehäuse 4, das grundsätzlich beliebig geformt sein kann, ist bei dem Ausführungsbeispiel gem. Fig. 1 bis 9 im wesentlichen quaderförmig, im Querschnitt also rechteckig ausgebildet, wobei sich seine Längsseitenwände 10 längs der Seitenfläche 12 des Motorblocks 12 erstrecken. Oberseits ist das Isoliergehäuse 4 von einem Deckel 13 verschlossen. Das Isoliergehäuse setzt sich aus einem den Abgaskrümmer 3 umschließenden ersten Gehäusebereich 15 und einem den Dieselpartikelfilter 5 aufnehmenden zweiten Gehäusebereich 14 zusammen. Der Abgaskrümmer 3 erstreckt sich unter gasdichter Durchführung durch eine Gehäusewand in den Innenraum 11 des Isoliergehäuses bzw. des ersten Gehäusebereichs 15 hinein und ist von diesem unter Freilassung zumindest eines oberseitigen und/oder unterseitigen Luftspaltsspalts 16 umfasst. Wie insbesondere Fig. 2, 4 und 6 zu entnehmen ist, weist das Isoliergehäuse 4 im Querschnitt kreisförmige mit Aushalsungen 17 versehene Öffnungen 18 auf, wobei die Aushalsungen 17 die Anschlussrohre gasdicht umgreifen, etwa an diesen angeschweißt oder auf eine andere Art und Weise daran fixiert sind. Der erste Gehäusebereich 15 ist im Querschnitt gesehen ebenfalls rechteckig, wobei seine Breite 19 geringer ist als die Breite 20 des zweiten Gehäusebereiches 14 (siehe Fig. 6). Die längs der Seitenfläche 12 des Motorblocks 1 verlaufenden Wandabschnitte 22a, 22b des ersten Gehäusebereichs 15 verlaufen schräg zum Motorblock 1, wobei sie mit der vom Flansch 7 aufgespannten Planebene 23 einen nach oben geöffneten spitzen Winkel α bilden. Durch diese Ausgestaltung ist auf der dem Motorblock 1 abgewandten Vorderseite 27 des ersten Gehäusebereiches 15 ein zusätzlicher, durch die gestrichelte Linie 24 angedeuteter Bauraum geschaffen, der zur platzsparenden Unterbringung des Turboladers 6 im Motorraum genutzt werden kann. Der Abgaskrümmer 3 ist der Schrägausrichtung des ersten Gehäusebereiches 15 angepasst. Dies wird dadurch erreicht, dass sein Sammelrohr 9 schräg oberhalb der Anschlussrohre 8 positioniert ist, wobei die vom Sammelrohr 9 aufgespannte Planebene 25 eine der Wandabschnitte 22 entsprechende Schrägstellung aufweist.

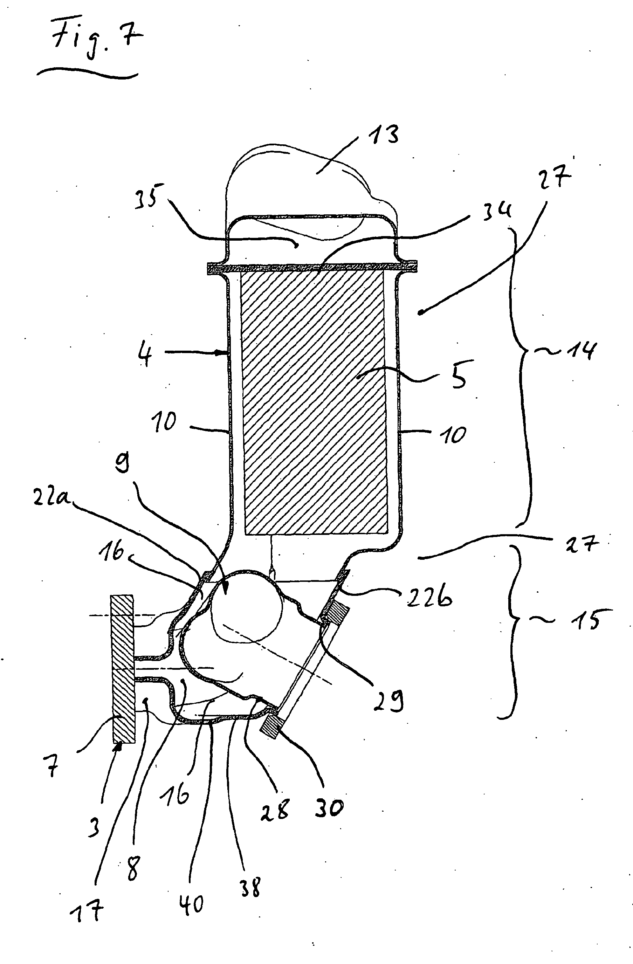

Das Sammelrohr 9 mündet mit einem mittleren Bereich in ein das Isoliergehäuse 4 durchsetzenden Einlassrohrs 26 des Turboladers 6 (Fig. 1). Dazu weist es einen mittig angeordneten Rohrstutzen 28 (Fig. 4,7) auf, der mit seinem Freiende in eine Wandöffnung 29 des Wandabschnitts 22b eingesetzt ist. An der Außenseite des Wandabschnitts 22b ist ein die Wandöffnung 29 sowie eine weitere Wandöffnung 32 des Wandabschnitts 22b umgrenzender Flansch 30 fixiert. In diesen wiederum ist das Einlassrohr 26 eingesetzt, welches eingangsseitig mit dem Turbolader 6 verbunden ist. Ausgangsseitig ist an den Turbolader 6 ein Auslassrohr 33 angesetzt, welches über die bereits erwähnte Wandöffnung 32 in den Innenraum 11 des Isoliergehäuses 4 mündet.

Während des Fahrzeugbetriebs strömt vom Turbolader kommendes Abgas über die Wandöffnung 32 in den ersten Gehäusebereich 15 ein und umströmt dabei auf Grund des dort vorhandenen Luftspaltes 16 den Abgaskrümmer 3. Dabei nimmt es von der Oberfläche des Abgaskrümmers 3 Wärme auf, ein Wärmeverlust beim Durchgang durch den Turbolader 6 wird dadurch zumindest teilweise ausgeglichen, bevor das Abgas von der Unterseite her in den Dieselpartikelfilter 5 eintritt. Um den Kontakt zwischen dem Abgas und der Oberfläche des Abgaskrümmers 3 zu intensivieren, ist es denkbar, zwischen einer Abgasbehandlungseinrichtung, im vorliegenden Fall also zwischen dem Dieselpartikelfilter 5 und dem Abgaskrümmer 3 ein Leitblech (nicht dargestellt) etwa an der Stelle des Pfeiles 19 in Fig. 6 anzuordnen. Ein solches Leitblech würde sich dann zweckmäßigerweise über einen möglichst großen Breitenbereich des Abgaskrümmers 3 erstrecken. Über das Auslassrohr 33 zuströmendes Abgas wäre dann gezwungen, zunächst in Breitenrichtung 41 den Abgaskrümmer 3 zu umströmen, bevor es dann über einen zwischen dem erwähnten Leitblech und der Gehäusewand vorhandenen Durchlass (nicht gezeigt) in den zweiten Gehäusebereich 14 und dort in die Abgasbehandlungseinrichtung gelangt. An der Oberseite 34 des Dieselpartikelfilters 5 ist ein Freiraum 35 vorhanden, der sich auf Grund einer Wölbung des das Isoliergehäuse 4 oberseits abschließenden Deckels 13 ergibt. Im Freiraum 35 sammelt sich das den Dieselpartikelfilter durchströmende Abgas und gelangt über eine Ausströmöffnung 36 in ein an diese angesetztes Abgasrohr 37. Während des Betriebs oder bei Fahrzeugstillstands nach unten fallende Rußpartikel sammeln sich im Bereich des Bodens 38 des Isoliergehäuses 4 an. Dadurch, dass die Wandöffnung 32 mit Vertikalabstand 39 (Fig. 6) zum Boden angeordnet ist, ist der Übertritt von Rußpartikeln über die Wandöffnung 32 und über das Auslassrohr 33 zum Turbolader 6 zumindest behindert. Weiterhin weist der Boden 38 eine Ausbuchtung 40 auf, die ein Reservoir zur Aufnahme von Rußpartikeln bildet.

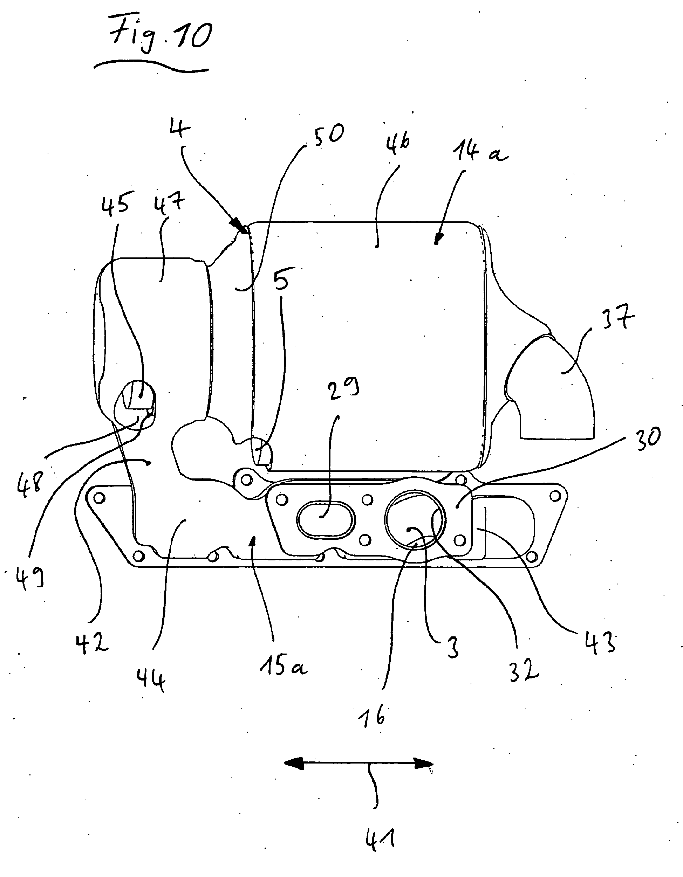

In Fig. 10 ist ein Ausführungsbeispiel dargestellt, bei dem der erste und der zweite Gehäusebereich 14a,15a jeweils als separate Teilgehäuse ausgebildet sind, wobei diese über einen Verbindungskanal 42 miteinander verbunden sind. Der Gehäusebereich 15a umschließt den Abgaskrümmer 3 mit einem allseitigen Luftspalt 16 und bildet einen Strömungskanal, der das über die Wandöffnung 32 einströmende Abgas in Breitenrichtung 41 über den Abgaskrümmer 3 leitet. Dabei ist die Wandöffnung 32 an dem einen Ende 43 und der Verbindungskanal 42 an dem in Breitenrichtung 41 gegenüberliegendend anderen Ende 44 des ersten Gehäusebereichs 15a angeordnet. Das Abgas umströmt somit den Abgaskrümmer 3 nahezu in dessen gesamter Breite, so dass ein wirkungsvoller Wärmeaustausch gewährleistet ist.

Bei dem in Fig. 10 gezeigten Ausführungsbeispiel ist der Gehäusebereich 14a und die in ihm vorhandene Abgasbehandlungseinrichtung, beispielsweise ein Dieselpartikelfilter 5, wie bei den weiter oben beschriebenen Ausführungsbeispielen auch, in platzsparender Weise an der Oberseite des Abgaskrümmers 3 angeordnet. Denkbar wäre auch eine Anordnung an der Unterseite des Abgaskrümmers 3.

Wie weiter oben schon erwähnt, können im Isoliergehäuse 4 mehrere Abgasbehandlungseinrichtungen vorhanden sein. Ein solcher Fall ist in Fig. 10 gezeigt, wo der Abgasbehandlungseinrichtung, speziell einem Dieselpartikelfilter 5, ein Oxidationskatalysator 45 vorgeschaltet ist. Für diesen treffen die schon erläuterten Vorteile hinsichtlich des Kaltstart- und Niederlastbetriebs gleichermaßen zu. Die als Dieselpartikelfilter 5 ausgebildete Abgasbehandlungseinrichtung weist bei dem Ausführungsbeispiel von Fig. 10 einen runden oder ovalen Querschnitt auf und ist von einer komplementär geformten Gehäusewand 46, ggf. unter Zwischenlage einer Lagerungsmatte (nicht gezeigt) gehalten. Der Oxidationskatalysator 45 weist eine geometrisch ähnliche Querschnittsform auf, ist jedoch insgesamt kleiner, hat also einen geringeren Umfang bzw. Durchmesser. Dementsprechend weist die ihn umfassende Gehäusewand 47 des Gehäusebereichs 14a einen entsprechend kleineren Durchmesser auf. An die Unterseite der Gehäusewand 47 bzw. des von dieser gebildeten Teilgehäuses ist der Verbindungskanal 42 angeformt. Damit das Abgas zum Oxidationskatalysator 45 gelangen kann, umfasst die Gehäusewand 47 diesen zumindest im Einströmungsbereich mit einem umfänglichen Luftspalt 48. Der Oxidationskatalysator 45 ist von einem Träger 49 in einer etwa zentralen, den Luftspalt 48 gewährleistenden Position gehalten. Die Gehäusewände 46 und 47 sind über einen konischen Bereich 50 miteinander verbunden.

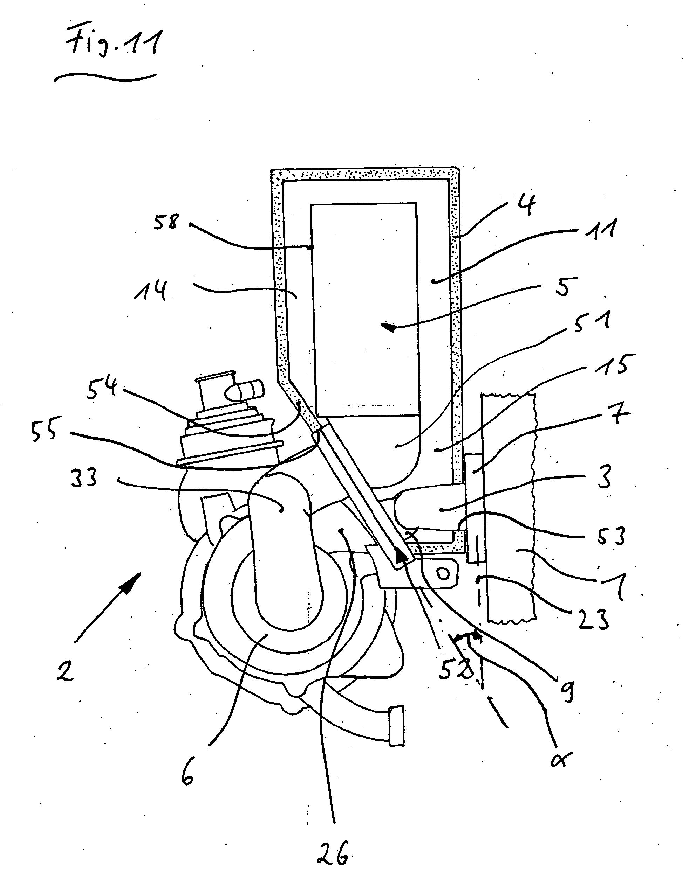

Fig. 11 zeigt eine Abgasanlage 2, bei welcher die Verbindung zwischen dem Turbolader 6 und dem Dieselpartikelfilter 5 bzw. allgemein einer Abgasbehandlungseinrichtung über einen den Innenraum 11 des Isoliergehäuses 4 durchsetzenden Abgaskanal 51 erfolgt. Die Abgasbehandlungseinrichtung ist von einem gasdichten Gehäuse 58 umschlossen, an welches der Abgaskanal 51 angeschlossen ist. Der Abgaskanal 51 ist mit einem Flansch 52 an das Auslassrohr 33 des Turboladers 6 angeschlossen. Über den Flansch 52 ist auch der Abgaskrümmer 3 bzw. dessen Sammelrohr 9 mit dem Einlassrohr 26 des Turboladers 6 verbunden. Der Abgaskrümmer 3 erstreckt sich über eine Öffnung 53 in das etwa quaderförmig ausgebildete Isoliergehäuse 4 hinein und ist, wie oben schon beschrieben, mit einem Flansch 7 an den Motorblock 1 angeschlossen. Die der Öffnung 3 gegenüberliegende Wand 54 des Isoliergehäuses 4 verläuft schräg und schließt mit der Planebene 23 des Flansches 7 einen nach oben geöffneten spitzen Winkel α ein. In der Wand 54 ist eine Öffnung 55 vorhanden, in welcher der Flansch 52 angeordnet ist. Da das den Turbolader 6 verlassende Abgas über den Abgaskanal 51 zum Dieselpartikelfilter 5 geleitet wird, gelangt kein Abgas in den Innenraum 11 des Isoliergehäuses 4, so dass dieses nicht gasdicht ausgeführt werden muss. Der zweite Gehäusebereich 14 bzw. der Dieselpartikelfilter 5 ist in raumsparender Weise oberhalb des Abgaskrümmers 3 angeordnet. Das in den Dieselpartikelfilter 5 einströmende Abgas verlässt diesen über ein das Isoliergehäuse 4 durchsetzendes (nicht gezeigte) Abgasrohr.

Bei der in Fig. 12 gezeigten, aus dem Stand der Technik bekannten Abgasanlage 2 ist kein Turbolader vorhanden. Ein Dieselpartikelfilter 5 bzw. eine sonstige von einem gasdichten Gehäuse 58 umschlossene Abgasbehandlungseinrichtung ist im zweiten Gehäusebereich 14 eines Isoliergehäuses 4 angeordnet und über ein Verbindungsrohr 56 und einen Flansch 57 direkt mit dem Abgaskrümmer 3 bzw. dessen Sammelrohr 9 verbunden. Da der sich zwischen Abgaskrümmer 3 und Dieselpartikelfilter erstreckende Abgasstrang gegenüber dem Innenraum 11 des Isoliergehäuses 4 abgeschlossen ist, ist eine gasdichte Ausführung des Isoliergehäuses nicht erforderlich.

## Patentansprüche

1. Abgasanlage für Brennkraft-Fahrzeuge, mit einem über mehrere Anschlussrohre (8) an einen Motorblock (1) anschließbaren Abgaskrümmer (3), einem einlassseitig mit dem Abgaskrümmer verbundenen Turbolader (6), und wenigstens einer dem Turbolader (6) nachgeschalteten Abgasbehandlungseinrichtung, wobei
zumindest ein Teil des Abgaskrümmers und die wenigstens eine Abgasbehandlungseinrichtung von einem gemeinsamen Isoliergehäuse (4) umschlossen sind, wobei der Turbolader (6) außerhalb des Isoliergehäuses (4) angeordnet ist.

2. Abgasanlage nach Anspruch 1,
**dadurch gekennzeichnet,**
**dass** der Turbolader (6) ausgangsseitig mit einem den Innenraum des Isoliergehäuses durchsetzenden Abgaskanal (51) mit einem die Abgasbehandlungseinrichtung umschließenden Gehäuse (58) verbunden ist.

3. Abgasanlage nach Anspruch 1,
**dadurch gekennzeichnet,**
**dass** der Turbolader (6) ausgangsseitig und die Abgasbehandlungseinrichtung eingangsseitig mit dem Innenraum des Isoliergehäuses (4) verbunden sind.

4. Abgasanlage nach Anspruch 3,
**dadurch gekennzeichnet,**
**dass** der Turbolader über eine Wandöffnung (32) mit dem Innenraum verbunden ist, die an einem den Abgaskrümmer (3) aufnehmenden ersten Gehäusebereich (15) des Isoliergehäuses (4) ungeordnet ist.

5. Abgasanlage nach Anspruch 4,
**dadurch gekennzeichnet,**
**dass** zwischen dem Abgaskrümmer (3) und der Wand des Gehäusebereichs (15) ein Luftspalt (16) vorhanden ist.

6. Abgasanlage nach Anspruch 4 oder 5,
**dadurch gekennzeichnet,**
**dass** der erste Gehäusebereich (15) vom einem die Abgasbehandlungseinrichtung aufnehmenden zweiten Gehäusebereich (14) abgetrennt ist und dadurch einen sich zumindest über einen Teilbreitenbereich des Abgaskrümmers (3) erstreckenden Strömungskanal bildet.

7. Abgasanlage nach Anspruch 6,
**dadurch gekennzeichnet,**
**dass** der erste Gehäusebereich (15a) den Abgaskrümmer (3) allseitig umschließt und in Breitenrichtung des Abgaskrümmers weisende Enden (43, 44) aufweist, wobei das eine Ende (44) mit dem zweiten Gehäusebereich (14) fluidisch verbunden ist und im Bereich des anderen Endes (43) die Wandöffnung (32) angeordnet ist.

8. Abgasanlage nach einem der vorhergehenden Ansprüche,
**dadurch gekennzeichnet,**
**dass** als Abgasbehandlungseinrichtung ein Dieselpartikelfilter (5) vorhanden ist.

9. Abgasanlage nach Anspruch 8,
**dadurch gekennzeichnet,**
**dass** dem Dieselpartikelfilter (5) eine weitere Abgasbehandlungseinrichtung vorgeschaltet ist.

10. Abgasanlage nach Anspruch 9,
**dadurch gekennzeichnet,**
**dass** die weitere Abgasbehandlungseinrichtung ein Oxidationskatalysator (45) ist.

11. Abgasanlage nach einem der vorhergehenden Ansprüche,
**dadurch gekennzeichnet,**
**dass** die Abgasbehandlungseinrichtung ober- oder unterhalb des Abgaskrümmers (3) angeordnet ist.

## Claims

1. Exhaust system for combustion-propelled vehicles, having an exhaust manifold (3) which can be connected via a plurality of connecting pipes (8) to an engine block (1), having a turbocharger (6) which is connected at the inlet side to the exhaust manifold, and having at least one exhaust-gas treatment device connected downstream of the turbocharger (6), with at least a part of the exhaust manifold and the at least one exhaust-gas treatment device being enclosed by a common insulating housing (4), with the turbocharger (6) being arranged outside the insulating housing (4).

2. Exhaust system according to Claim 1,
**characterized**
**in that** the turbocharger (6) is connected at the outlet side, via an exhaust-gas duct (51) which extends through the interior space of the insulating housing, to a housing (58) which encloses the exhaust-gas treatment device.

3. Exhaust system according to Claim 1,
**characterized**
**in that** the turbocharger (6) is connected at the outlet side, and the exhaust-gas treatment device is connected at the inlet side, to the interior space of the insulating housing (4).

4. Exhaust system according to Claim 3,
**characterized**
**in that** the turbocharger is connected to the interior space via a wall opening (32) which is arranged on a first housing region (15), which holds the exhaust manifold (3), of the insulating housing (4).

5. Exhaust system according to Claim 4,
**characterized**
**in that** an air gap (16) is provided between the exhaust manifold (3) and the wall of the housing region (15).

6. Exhaust system according to Claim 4 or 5,
**characterized**
**in that** the first housing region (15) is separated from a second housing region (14) holding the exhaust-gas treatment device, and thereby forms a flow duct which extends at least over a partial region of the width of the exhaust manifold (3).

7. Exhaust system according to Claim 6,
**characterized**
**in that** the first housing region (15a) encloses the exhaust manifold (3) on all sides and has ends (43, 44) pointing in the width direction of the exhaust manifold, with one end (44) being fluidically connected to the second housing region (14) and with the wall opening (32) being arranged in the region of the other end (43).

8. Exhaust system according to one of the preceding claims,
**characterized**
**in that** a diesel particle filter (5) is provided as an exhaust-gas treatment device.

9. Exhaust system according to Claim 8,
**characterized**
**in that** a further exhaust-gas treatment device is connected upstream of the diesel particle filter (5).

10. Exhaust system according to Claim 9,
**characterized**
**in that** the further exhaust-gas treatment device is an oxidation catalytic converter (45).

11. Exhaust system according to one of the preceding claims,
**characterized**
**in that** the exhaust-gas treatment device is arranged above or below the exhaust manifold (3).

## Revendications

1. Système d'échappement pour des véhicules à combustion interne, comprenant un collecteur (3) de gaz d'échappement pouvant être raccordé à un bloc-moteur (1) par plusieurs tuyaux (8) de raccordement, un turbocompresseur (6) communiquant du côté de l'admission avec le collecteur de gaz d'échappement, et au moins un dispositif de traitement des gaz d'échappement monté en aval du turbocompresseur (6), dans lequel
au moins une partie du collecteur de gaz d'échappement et le au moins un dispositif de traitement des gaz d'échappement sont entourés d'une enveloppe (4) isolante commune, le turbocompresseur (6) étant disposé à l'extérieur de l'enveloppe (4) isolante.

2. Système d'échappement suivant la revendication 1,
**caractérisé**
**en ce que** le turbocompresseur (6) communique du côté de la sortie, par un canal (51) pour les gaz d'échappement passant à l'intérieur de l'enveloppe isolante, avec une boîte (58) entourant le dispositif de traitement des gaz d'échappement.

3. Système d'échappement suivant la revendication 1,
**caractérisé**
**en ce que** le turbocompresseur (6) communique du côté de la sortie et le dispositif de traitement des gaz d'échappement du côté de l'entrée avec l'intérieur de l'enveloppe (4) isolante.

4. Système d'échappement suivant la revendication 3,
**caractérisé**
**en ce que** le turbocompresseur communique avec l'espace intérieur par une ouverture (32) dans une paroi, qui est disposée sur une première partie (15), recevant le collecteur (3) de gaz d'échappement, de l'enveloppe (4) isolante.

5. Système d'échappement suivant la revendication 4,
**Caractérisé**
**en ce qu**'il y a un intervalle (16) d'air entre le collecteur (3) de gaz d'échappement et la paroi de la partie (15) de l'enveloppe.

6. Système d'échappement suivant la revendication 4 ou 5,
**caractérisé**
**en ce que** la première partie (15) de l'enveloppe est séparée d'une deuxième partie (14) de l'enveloppe recevant le dispositif de traitement des gaz d'échappement et forme ainsi un canal d'écoulement s'étendant au moins sur une partie de la largeur du collecteur (3) de gaz d'échappement.

7. Système d'échappement suivant la revendication 6,
**caractérisé**
**en ce que** la première partie (15a) de l'enveloppe entoure le collecteur (3) de gaz d'échappement de tous côtés et a des extrémités (43, 44) tournées dans la direction de la largeur du collecteur de gaz d'échappement, l'une des extrémités (44) communiquant fluidiquement avec la deuxième partie (14) de l'enveloppe et l'ouverture (32) dans la paroi étant disposée dans la zone de l'autre extrémité (43).

8. Système d'échappement suivant l'une des revendications précédentes,
**caractérisé**
**en ce qu'**il y a un filtre (5) de particules diesel comme dispositif de traitement des gaz d'échappement.

9. Système d'échappement suivant la revendication 8,
**caractérisé**
**en ce qu'**un autre dispositif de traitement des gaz d'échappement est monté en amont du filtre (5) de particules diesel.

10. Système d'échappement suivant la revendication 9,
**caractérisé**
**en ce que** l'autre dispositif de traitement des gaz d'échappement est un pot (45) catalytique d'oxydation.

11. Système d'échappement suivant l'une des revendications précédentes,
**caractérisé**
**en ce que** le dispositif de traitement des gaz d'échappement est disposé au dessus ou en dessous du collecteur (3) de gaz d'échappement.
